# EUROPEAN PATENT APPLICATION

(11) **EP 3 648 058 A1**
(43) Date of publication of application: **06.05.2020**
(21) Application number: 19200409.1
(22) Date of filing: 30.09.2019
(51) Int. Cl.: G06T 7/155, G06T 7/11

(54) **TOPOGRAPHIC FEATURE ESTIMATION PROGRAM, TOPOGRAPHIC FEATURE ESTIMATION METHOD, AND TOPOGRAPHIC FEATURE ESTIMATION DEVICE**

(30) Priority: 29.10.2018 JP 2018202607
(71) Applicant: FUJITSU LIMITED, Kanagawa 211-8588 (JP)
(72) Inventor: Hidaka, Hiroshi, Kanagawa, 211-8588 (JP)
(74) Representative: Hoffmann Eitle

(57) **Abstract**

A topographic feature estimation processing that includes: classifying a plurality of measurement points, acquired by three-dimensional measurement of a scene and respectively including measurement information, into a plurality of point group sub-regions, each of which corresponds to a respective one of the plurality of classification vectors; and estimating topographic features of the scene by: for each of the plurality of point group sub-regions that have been classified for each of the measurement points included in the point group sub-region corresponding to a reference plane, taking a distance from the reference plane to each of the measurement points as a height of each of the measurement points, and by applying a progressive morphological filter to each of the plurality of point group sub-regions, removing a measurement point corresponding to a non-ground object from the plurality of measurement points acquired by the three-dimensional measurement.

## Description

### FIELD

The embodiments discussed herein relates to a topographic feature estimation program, a topographic feature estimation method, and a topographic feature estimation device.

### BACKGROUND

Technology exists in which a laser mounted to an unmanned aircraft or a vehicle is used to perform three-dimensional measurement of a scene, and a three-dimensional model is generated based on acquired measurement points. However, if measurement points are used "as-is" when generating the three-dimensional model, non-ground objects such as buildings and trees are incorporated, making it difficult to generate an accurate three-dimensional model of the topographic features.

Technology exists in which a progressive morphological filter (hereafter also referred to as a PMF) is applied to measurement points acquired by aerial measurement in order to generate an accurate three-dimensional model of the topographic features. A PMF uses height information of the measurement points to eliminate non-ground objects from the scene when estimating the topographic features.

The above technology is well-suited to application to measurement points acquired by aerial measurement, namely, topographic features that are present below in an open-topped scene. However, the technology is not suited to application to scenes that are closed off either above, at the sides, or both, namely, to scenes in which topographic features are present either above, at the sides, or both.

### [Related Patent Document]

Japanese Laid-Open Patent Publication No. 2017-198581

### [Non-Patent Documents]

Zhang et al, A Progressive Morphological Filter for Removing Nonground Measurements From Airborne LIDAR Data, IEEE TRANSACTIONS ON GEOSCIENCE AND REMOTE SENSING, April 2003, VOL. 41, NO. 4, pages 872 to 882.

Kazhdan et al, Poisson Surface Reconstruction, Eurographics, Symposium on Geometry Processing, 2006.

### SUMMARY

Accordingly, it is an object in one aspect of the embodiment to enable accurate estimation of topographic features present either above, at the sides, or both, in addition to topographic features present below.

According to an aspect of the embodiments, a topographic feature estimation processing includes: by using a plurality of classification vectors having mutually different orientations, classifying a plurality of measurement points, acquired by three-dimensional measurement of a scene and respectively including measurement information, into a plurality of point group sub-regions, each of which corresponds to a respective one of the plurality of classification vectors; and estimating topographic features of the scene by: for each of the plurality of point group sub-regions that have been classified, setting a plane intersecting the classification vector corresponding to the point group sub-region as a reference plane, for each of the measurement points included in the point group sub-region corresponding to the reference plane, taking a distance from the reference plane to each of the measurement points, the distance being acquired based on the measurement information of each of the measurement points, as a height of each of the measurement points, and by applying a progressive morphological filter to each of the plurality of point group sub-regions, removing a measurement point corresponding to a non-ground object from the plurality of measurement points acquired by the three-dimensional measurement.

### BRIEF DESCRIPTION OF DRAWINGS

Fig. 1 is a block diagram illustrating an example of relevant functionality of a topographic feature estimation device of a first exemplary embodiment;
Fig. 2 is a conceptual diagram illustrating an example of normal vectors corresponding to measurement points acquired by three-dimensional measurement;
Fig. 3A is a conceptual diagram illustrating an example of line of gaze vectors employed when classifying measurement points into point group sub-regions;
Fig. 3B is a conceptual diagram illustrating an example of line of gaze vectors employed when classifying measurement points into point group sub-regions;
Fig. 4 is a conceptual diagram to explain an example of topographic feature estimation processing of the first exemplary embodiment;
Fig. 5A is a conceptual diagram to explain an example of topographic feature estimation processing of the first exemplary embodiment;
Fig. 5B is a conceptual diagram to explain an example of topographic feature estimation processing of the first exemplary embodiment;
Fig. 6 is a block diagram illustrating an example of hardware of a topographic feature estimation device;
Fig. 7 is a flowchart illustrating an example of a flow of topographic feature estimation processing of the first exemplary embodiment;
Fig. 8 is a block diagram illustrating an example of relevant functionality of a topographic feature estimation device of a second exemplary embodiment;
Fig. 9 is a conceptual diagram to explain an example of topographic feature estimation processing of the second exemplary embodiment;
Fig. 10A is a flowchart illustrating an example of a flow of topographic feature estimation processing of the second exemplary embodiment;
Fig. 10B is a flowchart illustrating an example of a flow of missing point patching processing of the second exemplary embodiment;
Fig. 11A is a conceptual diagram illustrating an example of a scene to be measured; Fig. 11B is a conceptual diagram illustrating an example of a three-dimensional model generated using measurement points of the scene in Fig. 11A;
Fig. 11C is a conceptual diagram illustrating an example of a three-dimensional model generated in a case in which a PMF has been applied to measurement points of the scene in Fig. 11A;
Fig. 12A is a conceptual diagram illustrating an example of a scene to be measured; Fig. 12B is a conceptual diagram illustrating an example of a three-dimensional model generated using measurement points of the scene in Fig. 12A;
Fig. 12C is a conceptual diagram illustrating an example of a three-dimensional model generated in a case in which a PMF has been applied to measurement points of the scene in Fig. 12A;
Fig. 13A is a conceptual diagram illustrating an example of measurement points acquired by three-dimensional measurement;
Fig. 13B is a conceptual diagram illustrating an example of a three-dimensional model generated in a case in which a PMF has been applied to measurement points acquired by three-dimensional measurement without classifying into point group sub-regions;
Fig. 14A is a conceptual diagram illustrating an example of a situation suitable for application of an exemplary embodiment;
Fig. 14B is a conceptual diagram illustrating an example of a situation suitable for application of an exemplary embodiment;
Fig. 14C is a conceptual diagram illustrating an example of a situation suitable for application of an exemplary embodiment;
Fig. 14D is a conceptual diagram illustrating an example of a situation suitable for application of an exemplary embodiment; and
Fig. 14E is a conceptual diagram illustrating an example of a situation suitable for application of an exemplary embodiment.

### DESCRIPTION OF EMBODIMENTS

### First Exemplary Embodiment

Detailed explanation follows regarding an example of a first exemplary embodiment, with reference to the drawings.

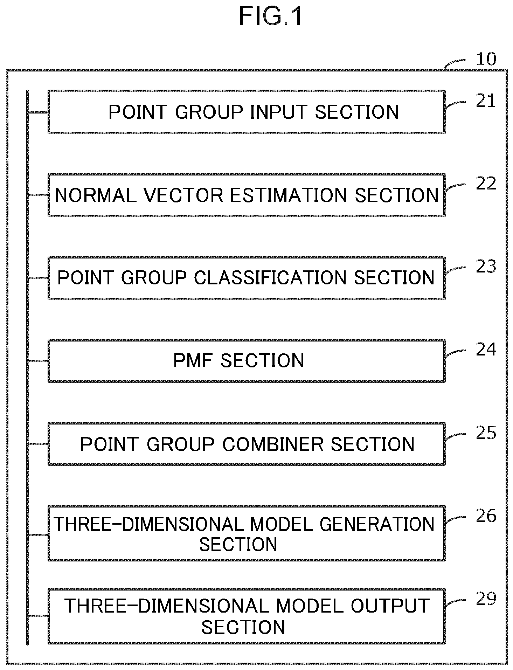

A topographic feature estimation device 10 illustrated as an example in Fig. 1 includes a point group input section 21, a normal vector estimation section 22, a point group classification section 23, a progressive morphological filter (hereafter PMF) section 24, a point group combiner section 25, a three-dimensional model generation section 26, and a three-dimensional model output section 29. The normal vector estimation section 22 and the point group classification section 23 correspond to a classification section, and the PMF section 24 and the point group combiner section 25 correspond to an estimation section.

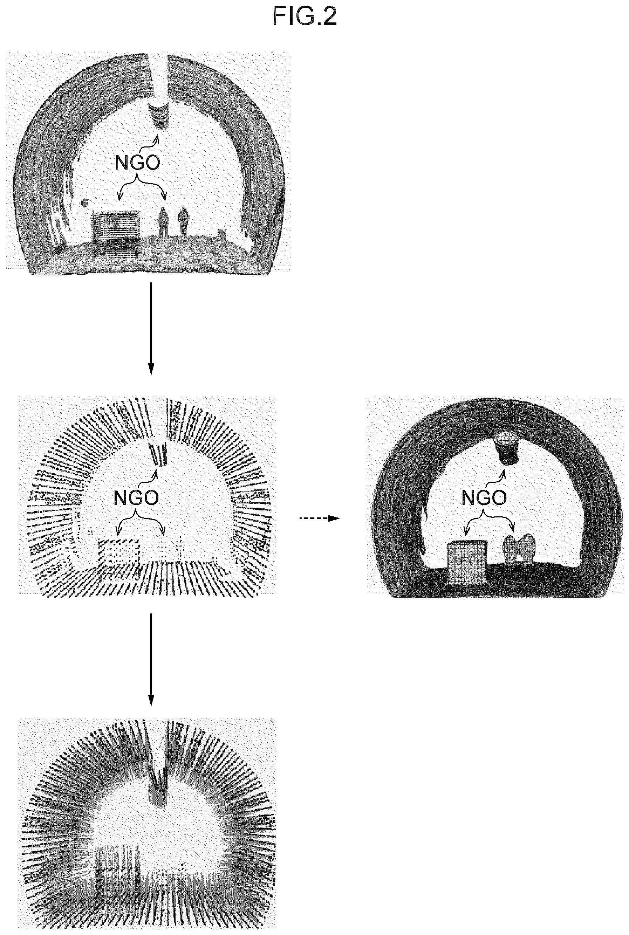

The point group input section 21 inputs a point group made up of measurement points (hereafter also referred to as points) acquired by three-dimensional measurement of a scene using a three-dimensional measurement device, for example. The upper-left portion of Fig. 2 illustrates an example of a point group acquired for a scene in a tunnel. Each of the measurement points includes measurement information such as a three-dimensional Cartesian coordinate value. The three-dimensional measurement device may be an existing device capable of omnidirectional measurement of a scene.

The normal vector estimation section 22 estimates a normal vector corresponding to each point in the point group. The normal vector is a vector orthogonal to a plane approximated using plural (for example ten to twenty) points peripheral to the target point, and the normal vector starts at the target point and heads toward a point of origin. The lower-left portion of Fig. 2 illustrates an example of a point group and normal vectors corresponding to the point group. In the example of the tunnel illustrated in Fig. 2, the point of origin is set at substantially the center of cross-section of the tunnel interior. However, there is no limitation thereto in the present exemplary embodiment. The point of origin may be set at any desired position in the cross-section of the tunnel interior.

The center-left portion of Fig. 2 illustrates an example of a state in which the number of points in the upper-left portion of Fig. 2 has been reduced in order to reduce the processing load. The lower-left portion of Fig. 2 illustrates an example of normal vectors for the point group at the center-left portion of Fig. 2. The reduction in the number of points is optional, and may be performed by an existing method. As an example of such a method, a first predetermined number of points may be reduced by eliminating a second predetermined number of points therefrom.

The point group classification section 23 classifies the points included in the point group into plural point group sub-regions corresponding to plural lines of gaze. Specifically, a quantity M (M≥2) of line-of-gaze vectors vⱼ (j being an integer from 1 to M) starting at the point of origin are utilized to classify the point group into point group sub-regions Cj corresponding to the respective line-of-gaze vectors vⱼ. Inner products of the normal vector n (pi) corresponding to a point pᵢ (i being an integer from 1 to L and L being the number of measurement points) and the inverse vector -vj of each line-of-gaze vector (hereafter referred to as a classification vector) are computed by n (pᵢ) · (-vⱼ). Each point pᵢ is classified into the point group sub-region Cⱼ that corresponds to the line-of-gaze vector vj that gives the maximum inner product n (pᵢ) · (-vⱼ). This is since the inner product of the normal vector and the classification vector becomes larger the closer an angle formed between the normal vector and the classification vector comes to 0 degrees.

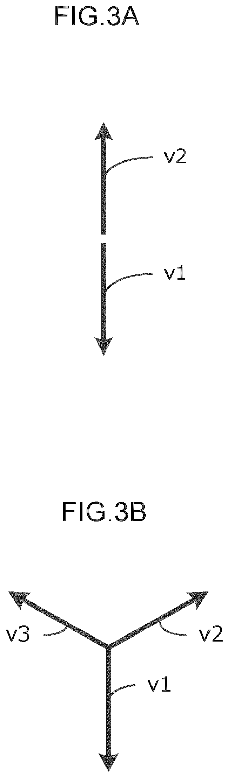

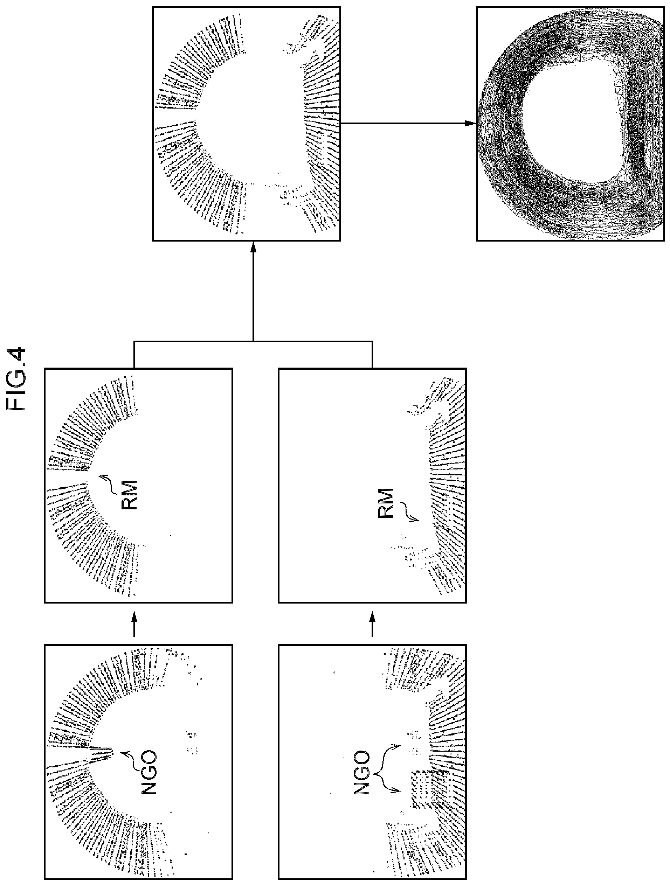

The upper-left and lower-left portions of Fig. 4 illustrate an example of classification into two point group sub-regions in a case in which the number M of line-of-gaze vectors is two. The upper-left portion of Fig. 4 illustrates an example of points included in a point group sub-region C₂ corresponding to a line-of-gaze vector v₂ illustrated in the example in Fig. 3A. The lower-left portion of Fig. 4 illustrates an example of points included in a point group sub-region C₁ corresponding to a line-of-gaze vector v₁ illustrated in the example in Fig. 3A.

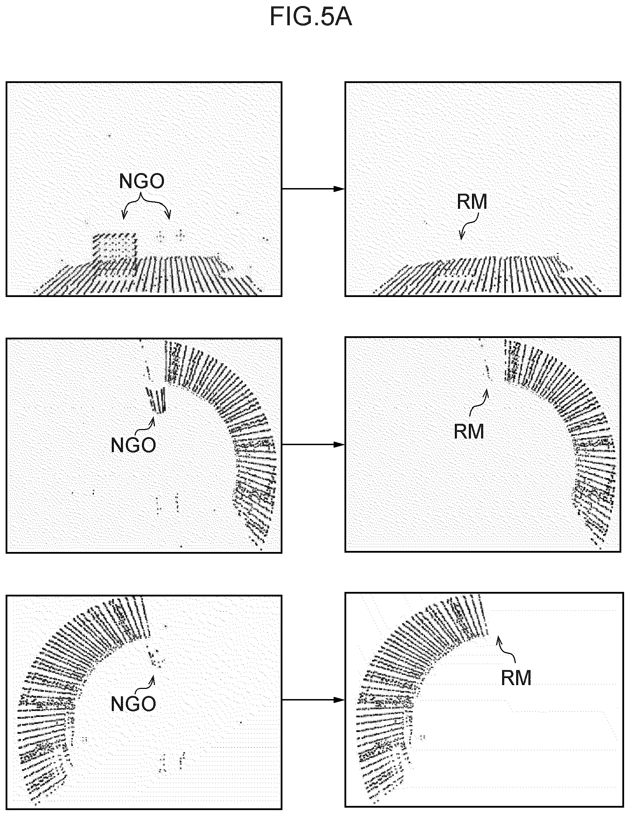

The upper-left, center-left, and lower-left portions of Fig. 5A illustrate an example of classification into three point group sub-regions in a case in which the number M of line-of-gaze vectors is three. The upper-left portion of Fig. 5A illustrates an example of points included in a point group sub-region C₁ corresponding to a line-of-gaze vector v₁ illustrated in the example in Fig. 3B. The center-left portion of Fig. 5A illustrates an example of points included in a point group sub-region C₂ corresponding to a line-of-gaze vector v₂. The lower-left portion of Fig. 5A illustrates an example of points included in a point group sub-region C₃ corresponding to a line-of-gaze vector v₃.

The PMF section 24 estimates the topographic features in the scene by applying a PMF to each point group sub-region. A morphological filter on which the PMF is based is a filter (straight line or plane filter in an xy plane) of a predetermined size adapted to the lowest height amongst heights (z coordinates) of plural measurement points acquired by measurement from above after application of a filter, and is capable of removing non-ground objects that have a small upper surface area, such as trees.

However, the morphological filter is unable to remove non-ground objects that are larger than the filter of the predetermined size, such as buildings. Accordingly, in the PMF, the size of the filter used as the morphological filter is gradually increased, thereby enabling non-ground objects that are larger than the filter of the predetermined size to be removed.

However, simply gradually increasing the size of the filter might, for example, also remove protrusions on the ground with substantially the same upper surface area as a building. In general, the incline of a protrusion on the ground, this being a natural object, is gentler than the incline of a side face of a non-ground object such as a building. Thus, in the process of gradually increasing the size of the filter, a protrusion on the ground would be gradually removed, whereas a building would be removed all at once. Exploiting this characteristic, a protrusion on the ground that is gradually removed is determined to be a natural object and not ultimately removed, whereas a building that is removed all at once is determined to be a non-ground object and ultimately removed.

The PMF section 24 applies the PMF to each point group sub-region. When applying the PMF to each point group sub-region, a plane intersecting the classification vector corresponding to the point group sub-region is taken as a reference plane for each point group sub-region, and a distance acquired based on the distance from the reference plane to each measurement point included in the point group sub-region corresponding to the reference plane is taken to be the height of the respective measurement point. Namely, the PMF is applied to each point group sub-region from the perspective of a line of gaze looking down on the point group sub-region from above.

Specifically, for example, the PMF section 24 rotates each point group sub-region other than the point group sub-region C₁ corresponding to the line-of-gaze vector v₁, such that the line-of-gaze vectors of the other point group sub-regions overlap the line-of-gaze vector v₁. After having applied the PMF to each of the point group sub-regions, the PMF section 24 rotates the point group sub-regions other than the point group sub-region C₁ corresponding to the line-of-gaze vector v₁ back to their respective pre-rotation angles.

In the example in Fig. 4, the PMF section 24 rotates the point group configured by the point group sub-region C₂ corresponding to the line-of-gaze vector v₂ in Fig. 3A such that the line-of-gaze vector v₂ and the line-of-gaze vector v₁ overlap. After having applied the PMF to both the point group sub-region C₁ and the point group sub-region C₂, the PMF section 24 rotates the point group sub-region C₂ back to its pre-rotation angle. The lower-center portion of Fig. 4 illustrates an example of a result of the PMF being applied to the point group sub-region C₁ to remove non-ground objects NGO. The upper-center portion of Fig. 4 illustrates an example of a result of the PMF being applied to the point group sub-region C₂ to remove a non-ground object NGO. Points corresponding to the non-ground objects NGO have been removed at the positions RM.

In the example in Fig. 5A, the PMF section 24 rotates the point group sub-region C₂ corresponding to the line-of-gaze vector v₂ in Fig. 3B such that the line-of-gaze vector v₂ and the line-of-gaze vector v₁ overlap. The PMF section 24 also rotates the point group sub-region C₃ corresponding to the line-of-gaze vector v₃ in Fig. 3B such that the line-of-gaze vector v₃ and the line-of-gaze vector v₁ overlap. After having applied the PMF to each of the point group sub-regions C₁, C₂, and C₃, the PMF section 24 rotates the point groups of the point group sub-region C₂ corresponding to the line-of-gaze vector v₂ and the point group sub-region C₃ corresponding to the line-of-gaze vector v₃ back to their respective pre-rotation angles.

The upper-right portion of Fig. 5A illustrates an example of a result of the PMF being applied to the point group sub-region C₁ to remove non-ground objects NGO. The center-right portion of Fig. 5A illustrates an example of a result of the PMF being applied to the point group sub-region C₂ to remove a non-ground object NGO. The lower-right portion of Fig. 5A illustrates an example of a result of the PMF being applied to the point group sub-region C₃ to remove a non-ground object NGO.

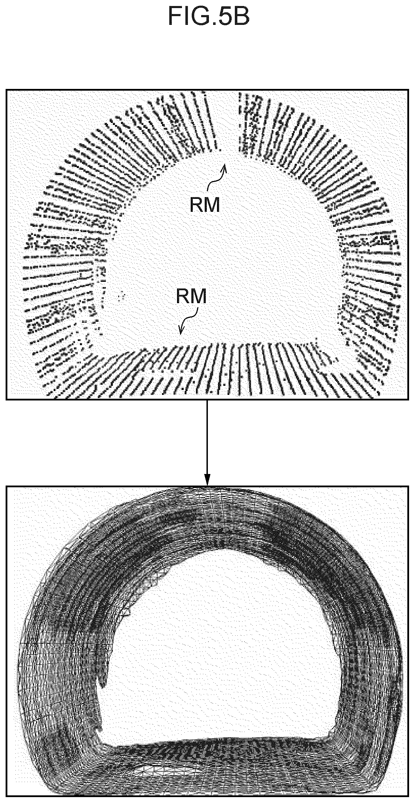

The point group combiner section 25 combines the point group sub-regions. The upper-right portion of Fig. 4 illustrates an example in which the point group sub-region C₂ at the upper-center and the point group sub-region C₁ at the lower-center portion of Fig. 4 have been combined into a combined point group. The upper portion of Fig. 5B illustrates an example in which the point group sub-region C₁ at the upper-right, the point group sub-region C₂ at the center-right, and the point group sub-region C₃ at the lower-right portions of Fig. 5A have been combined into a combined point group.

The three-dimensional model generation section 26 uses the combined point group to generate a three-dimensional model. An existing method may be applied for three-dimensional model generation. For example, the lower-right portion of Fig. 4 illustrates an example of a mesh generated by Poisson Surface Reconstruction using the combined point group at the upper-right portion of Fig. 4. The bottom portion of Fig. 5B illustrates an example of a mesh generated by Poisson Surface Reconstruction using the combined point group at the upper portion of Fig. 5B.

The three-dimensional model output section 29 outputs the generated three-dimensional model to an output device. The output device may be an external storage device that stores the three-dimensional model information as a file, or a display that visually displays the three-dimensional model.

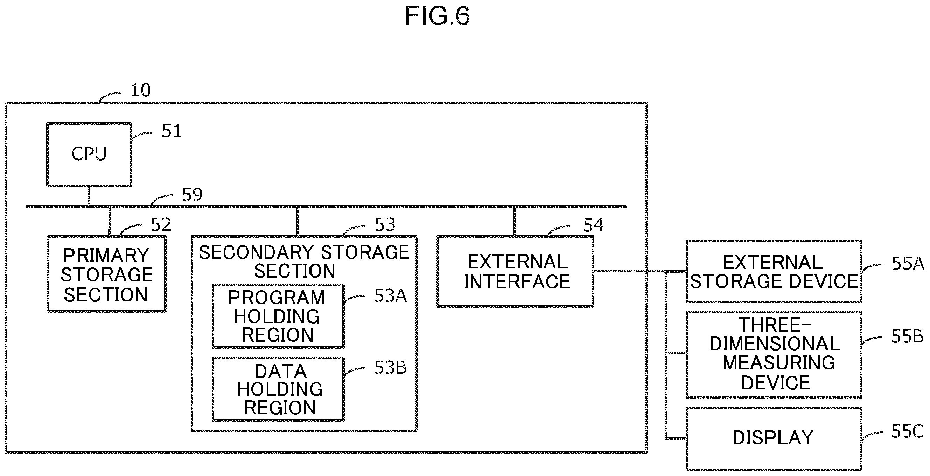

As illustrated in Fig. 6 as an example, the topographic feature estimation device 10 includes a central processing unit (CPU) 51, a primary storage section 52, a secondary storage section 53, and an external interface 54. The CPU 51 is an example of a processor, this being hardware. The CPU 51, the primary storage section 52, the secondary storage section 53, and the external interface 54 are connected to each other through a bus 59.

The primary storage section 52 is volatile memory such as random access memory (RAM). The secondary storage section 53 is non-volatile memory such as a hard disk drive (HDD) or a solid state drive (SSD).

The secondary storage section 53 includes a program holding region 53A and a data holding region 53B. As an example, the program holding region 53A stores programs such as a topographic feature estimation program. As an example, the data holding region 53B stores information regarding measurement points acquired using three-dimensional measurement, and intermediate data generated during execution of the topographic feature estimation program.

The CPU 51 reads the topographic feature estimation program from the program holding region 53A and expands the program in the primary storage section 52. By loading and executing the topographic feature estimation program, the CPU 51 operates as the point group input section 21, the normal vector estimation section 22, the point group classification section 23, the PMF section 24, the point group combiner section 25, the three-dimensional model generation section 26, and the three-dimensional model output section 29 respectively illustrated in Fig. 1.

Note that programs such as the topographic feature estimation program may be stored in an external server and expanded in the primary storage section 52 via a network. Alternatively, programs such as the topographic feature estimation program may be stored on a non-transitory recording medium such as a digital versatile disc (DVD) and expanded in the primary storage section 52 using a recording medium reading device.

External devices are connected to the external interface 54, and the external interface 54 oversees the exchange of various information between the external devices and the CPU 51. Fig. 6 illustrates an example in which an external storage device 55A, a three-dimensional measuring device 55B, and a display 55C are connected to the external interface 54.

However, configuration may be such that the external storage device 55A, the three-dimensional measuring device 55B, and the display 55C are not connected to the external interface 54, or such that only one or two of these external devices are connected to the external interface 54. Any combination of some or all out of the external storage device 55A, the three-dimensional measuring device 55B, and the display 55C may be built into the topographic feature estimation device 10, or may be disposed remotely to the topographic feature estimation device 10 over a network.

The topographic feature estimation device 10 may be a dedicated device, or a workstation, a personal computer, or a tablet.

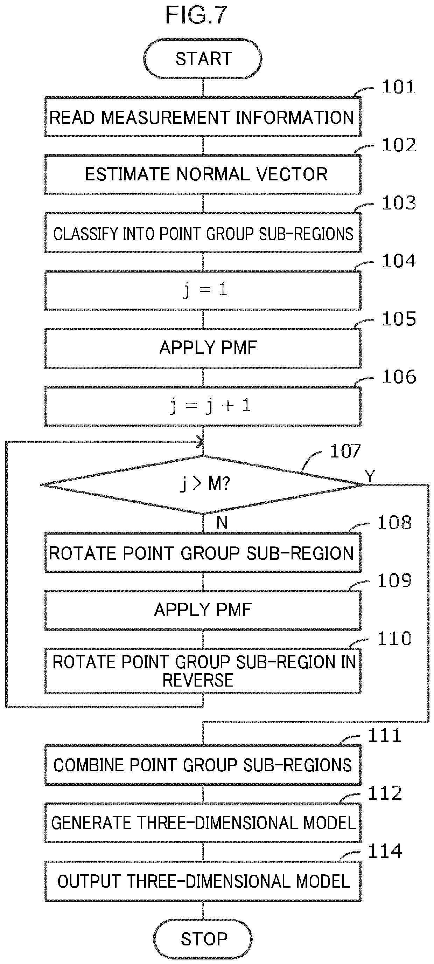

Explanation follows regarding an outline of a topographic feature estimation processing operation. Fig. 7 illustrates an example of a flow of the topographic feature estimation processing. At step 101, the CPU 51 reads information regarding measurement points acquired by three-dimensional measurement of a scene. At step 102, the CPU 51 estimates a normal vector for each of the points.

At step 103, the CPU 51 classifies the respective points into plural point group sub-regions Cⱼ based on the normal vector corresponding to each point and the classification vector -vⱼ, this being an inverse vector of the line-of-gaze vector vⱼ. At step 104, the CPU 51 sets a variable j for distinguishing between the plural point group sub-regions to 1. At step 105, the CPU 51 applies the PMF to the point group sub-region C₁ to remove points corresponding to non-ground objects from the points included in the point group sub-region C₁.

At step 106, the CPU 51 increments the variable j by 1 in order to transition processing to the next point group sub-region. At step 107, the CPU 51 determines whether or not the value of the variable j has exceeded the value M representing the number of point group sub-regions, namely, whether or not processing has been completed for all the point group sub-regions. In cases in which a negative determination is made at step 107, namely, in cases in which a point group sub-region for which processing has not yet been completed is present, at step 108, the CPU 51 changes the line of gaze toward the point group sub-region Cj to a perspective as if looking down from above.

Specifically, for example, the point group sub-region Cj is rotated by being multiplied by a rotation matrix Rⱼ such that the corresponding line-of-gaze vector vⱼ overlaps v₁ as illustrated in the examples in Fig. 3A and Fig. 3B. At step 109, the CPU 51 applies the PMF to the rotated point group sub-region Cⱼ. At step 110, the CPU 51 returns the point group sub-region Cj to its original line of gaze. Namely, the point group sub-region Cj to which the PMF has been applied is multiplied by an inverse matrix Rⱼ⁻¹ of the rotation matrix used at step 108, such that point group sub-region Cⱼ rotated at step 108 is rotated in the opposite direction to that at step 108 so as to be rotated in reverse by the same angle and return to its original position.

In cases in which affirmative determination is made at step 107, namely, in cases in which determination is made that processing of all the point group sub-regions has been completed, at step 111, the CPU 51 combines the plural point group sub-regions applied with the PMF and from which non-ground objects have been removed to generate a combined point group. At step 112, the CPU 51 uses the points included in the combined point group to generate a three-dimensional model, and outputs the generated three-dimensional model to an output device at step 114. Information regarding the three-dimensional model output to a file may be utilized as information to generate a three-dimensional model in LandXML format, this being close to being accepted as a standard for three-dimensional topographical modelling.

Note that at step 103, in cases in which classification is made into two point group sub-regions, these being an upper and a lower point group sub-region C₁ and point group sub-region C₂ as in the example illustrated in Fig. 3A, classification may be made based on whether the z coordinates (height direction coordinates) are positive values or negative values, instead of using the inner product of the classification vector and the normal vector. Namely, points with positive z coordinate values are classified into the point group sub-region C₂ illustrated in the example at the upper-left portion of Fig. 4, and points with negative z coordinate values are classified into the point group sub-region C₁ illustrated in the example at the lower-left portion of Fig. 4.

At step 108 and step 110, the corresponding point group sub-region is rotated, and then rotated back again. Thus, when the PMF is applied at step 109, for each of the plural classified point group sub-regions, a plane intersecting the classification vector corresponding to the point group sub-region is taken as a reference plane, and the distance from the reference plane to each point included in the point group sub-region corresponding to the reference plane is taken to be the height of the respective point. Namely, the respective line of gaze according to each point group sub-region is modified to a line of gaze from a perspective looking down on the point group sub-region from above before applying the PMF.

However, instead of rotating and then rotating back again, for example, a hypothetical plane corresponding to a reference plane intersecting the line-of-gaze vector or the classification vector may be set, a distance from each point in the corresponding point group sub-region to the plane computed, and this computed distance taken as the height when applying the PMF. This also enables the line of gaze to each point group sub-region to be modified to a line of gaze looking down on the point group sub-region from above before applying the PMF.

Note that although examples have been given in which two or three line-of-gaze vectors are employed, the number and orientation of the line-of-gaze vectors may be set as appropriate. Increasing the number of line-of-gaze vectors, namely, the number of classification vectors, and thereby increasing the number of point group sub-regions, namely, the number of measurement point classifications, enables each measurement point to be classified into a suitable point group sub-region corresponding to an appropriate line of gaze, thereby enabling performance to be improved when removing non-ground objects.

The line-of-gaze vectors do not necessarily all have to be present in a plane formed by two line-of-gaze vectors, and may be set at omnidirectional uniformly spaced angles corresponding to 4π [sr]. Moreover, the downward-oriented vector v₁ illustrated in the examples in Fig. 3A and Fig. 3B does not need to run vertically downward. For example, for topography that slopes over a wide range, the coordinate axes may be set such that the sloped face runs along the xy plane, and the line-of-gaze vector v₁ may be set so as to be oriented toward the xy plane and run along a z axis orthogonal to the xy plane. Note that the set line-of-gaze vector v₁ may be set as a vector corresponding to a line of gaze from a perspective looking down from above.

In the present exemplary embodiment, the measurement points are classified into the plural point group sub-regions corresponding to the plural line-of-gaze vectors, the line of gaze toward each of the plural point group sub-regions is modified to a line of gaze looking down from above before applying the PMF, and the plural point group sub-regions are then combined. Thus, as illustrated in the examples at the lower-right portion of Fig. 4 and the lower portion of Fig. 5B, a three-dimensional model from which non-ground objects have been removed can be acquired, and topographic features present above and at the sides are accurately estimated in addition to topographic features below. Note that, for example, "below" refers to an orientation set as the orientation of the line-of-gaze vector v₁, and topographic features present at the sides refer to topographic features present in directions 360° around a hypothetical axis running from above to below.

The present exemplary embodiment may be applied at the scene of a tunnel during tunneling work. Non-ground objects such as heavy machinery, people, and ducts are present in the tunnel during tunneling work, but it would take time and money to physically remove these non-ground objects in order to measure the topographic features of the tunnel during tunneling work, which would be unfeasible. However, measuring the scene in a state in which non-ground objects are present and then applying the present exemplary embodiment to estimate the topographic features with the non-ground objects removed from the scene enables a reduction in time and cost and would be very useful.

Tunneling work for a tunnel through a mountain, for example, involves repeating a cycle including drilling, charging, blasting, spoil clearing, loose rock removal, chiseling, primary spraying, steel support installation, secondary spraying, and rock bolting every 1.0 meters to 1.2 meters, both day and night. The workface is measured after spoil clearing to check the level of progress made by blasting, and to check the chiseling and clearance amount. By applying the present exemplary embodiment after spoil clearing, such as during work changeover preparations, such that there is no detriment to the normal tunneling work cycle, the topographic features can be accurately estimated from the measured scene without hindrance to the tunneling work. Moreover, information regarding the estimated topographic features can be immediately utilized in the tunneling work. This enables the time and cost of tunneling work to be reduced.

In the present exemplary embodiment, plural classification vectors with different orientations are used to acquire three-dimensional measurements of a scene, and plural measurement points each including measurement information are classified into plural point group sub-regions corresponding to the plural classification vectors. By applying a progressive morphological filter to each of the plural point group sub-regions, measurement points corresponding to non-ground objects are removed from the plural measurement points acquired by the three-dimensional measurement, and the topographic features of the scene are estimated. For each of the plural classified point group sub-regions, taking a plane intersecting the classification vector corresponding to the point group sub-region as a reference plane, a distance from the reference plane to each measurement point included in the point group sub-region corresponding to the reference plane, this distance being acquired based on the measurement information for the measurement point, is taken to be the height of the respective measurement point.

The present exemplary embodiment thereby enables topographic features present either above, at the sides, or both to be accurately estimated in addition to topographic features present below.

### Second Exemplary Embodiment

Detailed explanation follows regarding an example of a second exemplary embodiment, with reference to the drawings. Explanation regarding similar configuration and operation to that in the first exemplary embodiment is omitted.

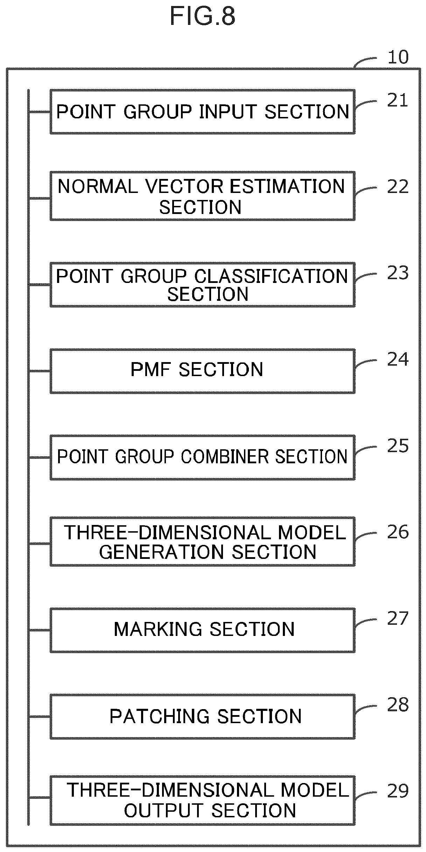

Fig. 8 illustrates an example of a topographic feature estimation device 10 of the second exemplary embodiment. The topographic feature estimation device 10 of the second exemplary embodiment differs to the topographic feature estimation device 10 of the first exemplary embodiment in that it includes a marking section 27 and a patching section 28.

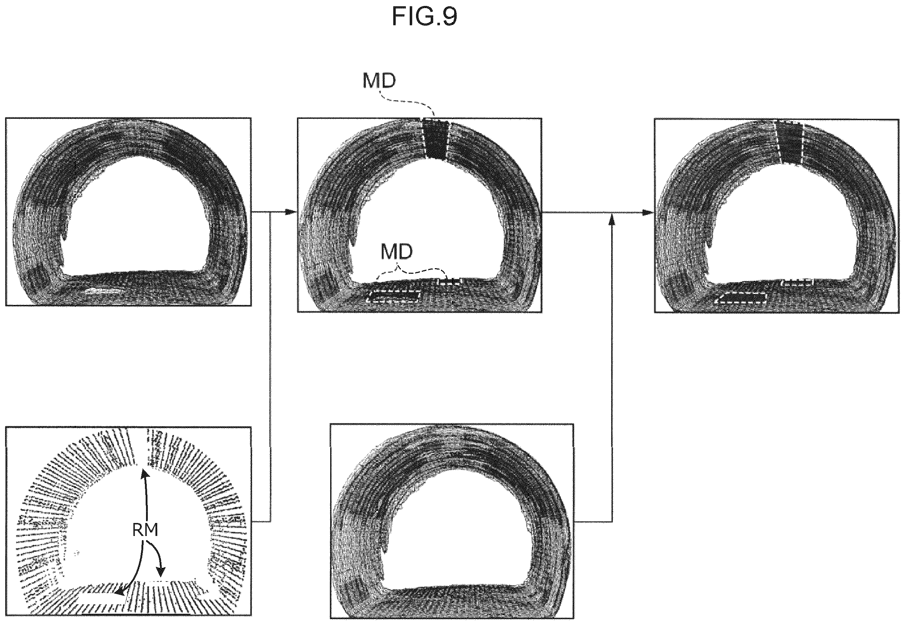

The marking section 27 marks missing portions of a three-dimensional model. A missing portion is a portion where a point corresponding to an element of the three-dimensional model is missing following the removal of points corresponding to non-ground objects as a result of the application of the PMF at step 109 in Fig. 7. Points corresponding to non-ground objects are removed due to the PMF being applied at step 109 in Fig. 7. For example, in the lower-left portion of Fig. 9, this results in the portions RM where points corresponding to the ground where contacted by non-ground objects are missing.

As illustrated as an example at the upper-left portion of Fig. 9, points in missing portions are interpolated by applying existing technology such as Poisson Surface Reconstruction during three-dimensional model generation. As illustrated in the example at the upper-center portion of Fig. 9, the marking section 27 appends a mark MD to each portion in the three-dimensional model where a point corresponding to an element is missing. The mark MD may for example be a visible mark in a particular color, or an invisible mark such as tag information.

The patching section 28 in Fig. 8 patches over missing portions in a first three-dimensional model, generated using measurement points acquired by three-dimensional measurement at a first timing, using a second three-dimensional model generated using measurement points acquired by three-dimensional measurement at a second timing. For example, by performing topographic feature estimation processing to remove non-ground objects without actually physically removing the non-ground objects during tunneling work so as not to delay to the work, there is no hindrance to the tunneling work. Patching over the missing portions after the non-ground objects have actually been physically removed, such as after the tunneling work is complete, enables accurate topographic feature estimation information that is a closer approximation of the actual topographic features to be maintained.

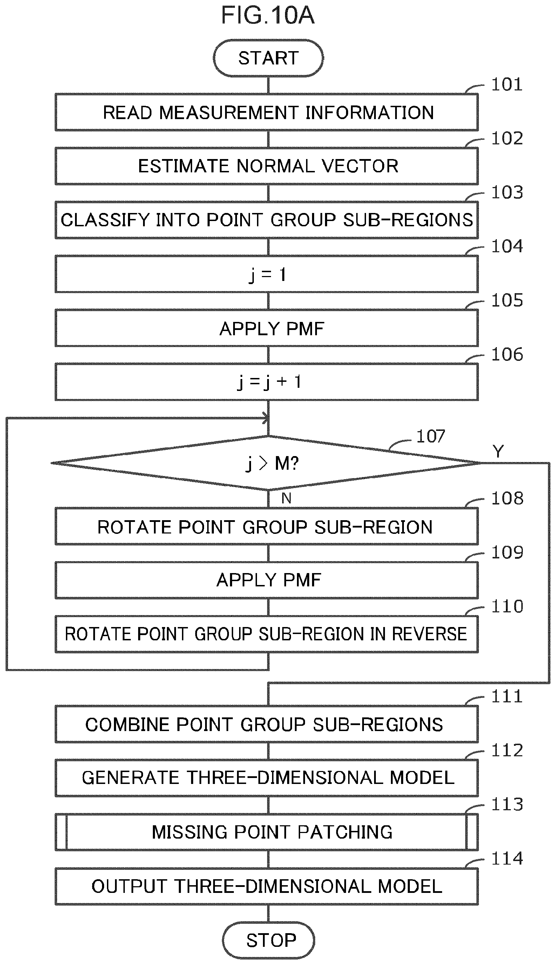

Explanation follows regarding an outline of topographic feature estimation processing operation of the second exemplary embodiment. Fig. 10A illustrates an example of a flow of the topographic feature estimation processing. The topographic feature estimation processing in Fig. 10A differs to the topographic feature estimation processing in Fig. 7 in the respect that it includes the missing point patching processing of step 113.

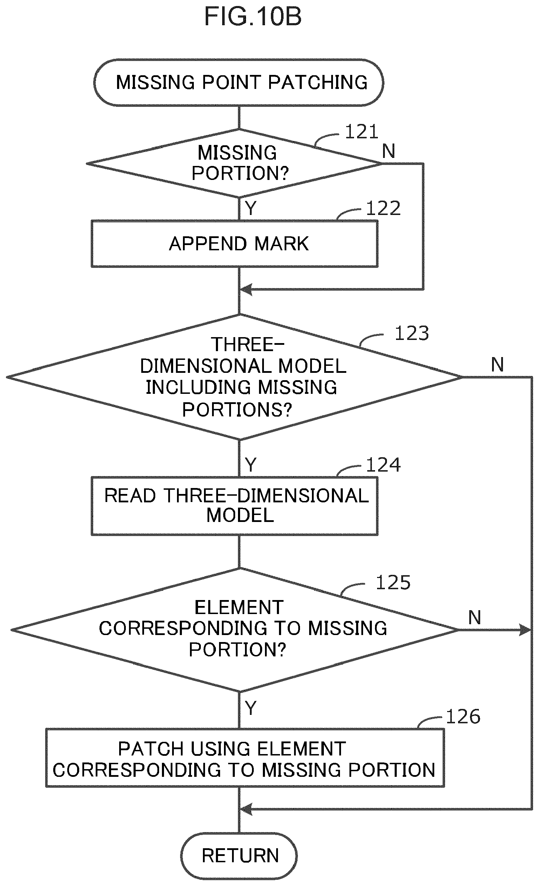

Fig. 10B illustrates a detailed example of the missing point patching processing of step 113 in Fig. 10A. At step 121, the CPU 51 determines whether or not there is a missing portion in the three-dimensional model generated at step 112. Specifically, the CPU 51 computes a shortest distance between each element sₖ (k being an integer from 1 to Q and Q being the number of elements) configuring the three-dimensional model and each point included in the respective point group sub-regions Cj, and determines that an element sₖ does not correspond to a missing portion in cases in which the shortest distance is a predetermined threshold value dₜₕ or below.

In cases in which the shortest distance exceeds the predetermined threshold value dₜₕ, determination is made that the element sₖ corresponds to a missing portion. The predetermined threshold value dₜₕ may for example be 10 cm. This is because the element sₖ is estimated to be an element generated by interpolation during generation of the three-dimensional model. For example, the three-dimensional model may be a mesh, and each element may be a polygon.

At step 122, the CPU 51 appends a mark MD to the missing portion, as illustrated by the example at the upper-center portion of Fig. 9. At step 123, the CPU 51 determines whether or not a three-dimensional model including missing portions, namely, a three-dimensional model including marks MD already exists. Namely, determination is made as to whether or not a three-dimensional model corresponding to measurement points acquired by three-dimensional measurement of the same scene as the three-dimensional model generated at step 112 and including a mark MD has already been saved as a file, for example. For example, such a file may be searched for amongst files saved in the data holding region 53B or the external storage device 55A in Fig. 6.

In cases in which a negative determination is made at step 123, the CPU 51 ends the missing point patching processing. In cases in which an affirmative determination is made at step 123, at step 124, the CPU 51 reads the three-dimensional model corresponding to the first three-dimensional model including missing portions. At step 125, the CPU 51 determines whether or not an element is present that corresponds to a mark MD indicating a missing portion in the three-dimensional model corresponding to the second three-dimensional model generated at step 112, but is not a missing portion in the first three-dimensional model. An element that is not a missing portion is an element that is not appended with a mark MD.

In cases in which a negative determination is made at step 125, the CPU 51 ends the missing point patching processing. In cases in which an affirmative determination is made at step 125, at step 126, the CPU 51 patches over the missing portion in the three-dimensional model generated at step 112 using the element that is not a missing portion in the three-dimensional model read at step 124, and then ends the missing point patching processing. At step 114 in Fig. 10A, the CPU 51 outputs any or all out of the three-dimensional model generated at step 112, the three-dimensional model appended with markings MD at step 122, or the three-dimensional model for which the missing portions were patched at step 126, to an output device. Namely, these three-dimensional models may for example be stored in the external storage device 55A or displayed on the display 55C.

Note that a missing portion may be a portion corresponding to a measurement point that is not included in any point group sub-region when the measurement points are classified into point group sub-regions at step 103. Namely, a missing portion may be a portion where a point corresponding to an element of the three-dimensional model is missing due to an angle formed between a classification vector and the normal vector of the measurement point being a predetermined angle or greater. For example, if the processing speed is increased by suppressing the number of point group sub-regions during tunneling work, increasing the number of point group sub-regions after the tunneling work has been completed enables accurate topographic feature estimation information that is a closer approximation of the actual topographic features to be maintained.

In the present exemplary embodiment, plural classification vectors with mutually different orientations are used to acquire a three-dimensional measurement of a scene and classify plural measurement points that each includes measurement information into plural point group sub-regions corresponding to the plural classification vectors. A progressive morphological filter is applied to each of the plural point group sub-regions, thereby removing measurement points corresponding to non-ground objects from the plural measurement points acquired by three-dimensional measurement, to estimate the topographic features of the scene. For each of the plural classified point group sub-regions, taking a plane intersecting the classification vector corresponding to the point group sub-region as a reference plane, a distance from the reference plane to each measurement point included in the point group sub-region corresponding to the reference plane, this distance being acquired based on the measurement information for the measurement point, is taken to be the height of the respective measurement point.

The present exemplary embodiment thereby enables topographic features present either above, at the sides, or both to be accurately estimated in addition to topographic features present below.

In the present exemplary embodiment, a mark is appended to an element in the combined point group corresponding to a missing portion where a point corresponding to an element included in a three-dimensional model is missing. Moreover, in the present exemplary embodiment, a missing portion in a first three-dimensional model is patched over using an element included in a second three-dimensional model corresponding to plural measurement points acquired by three-dimensional measurement of a similar scene to the scene corresponding to the first three-dimensional model.

Thus, for example, missing portions in a three-dimensional model generated during tunneling work can be patched over using elements in a three-dimensional model generated using measurement points acquired by three-dimensional measurement after non-ground objects have been actually physically removed, such as after the tunneling work has ended. This enables more accurate topographic feature estimation information to be maintained.

The flowcharts of Fig. 7, Fig. 10A and Fig. 10B are merely examples, and the sequence of the steps may be changed as appropriate.

### Comparison to Related Technology

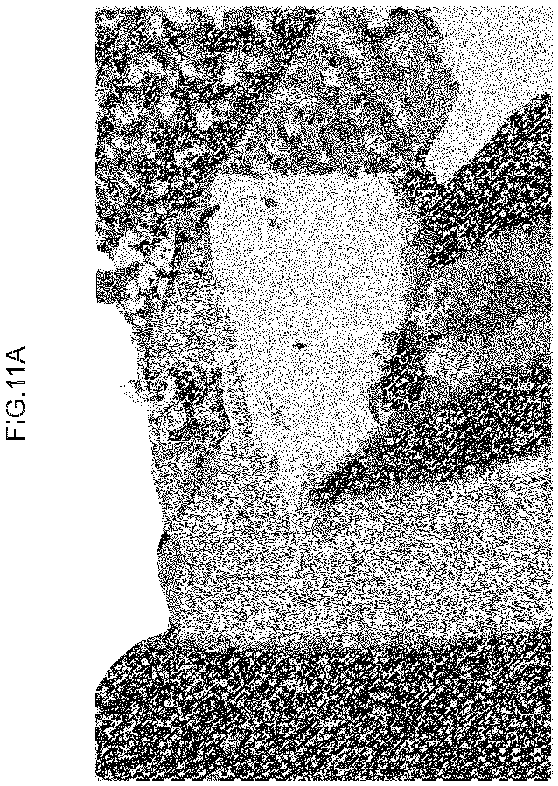

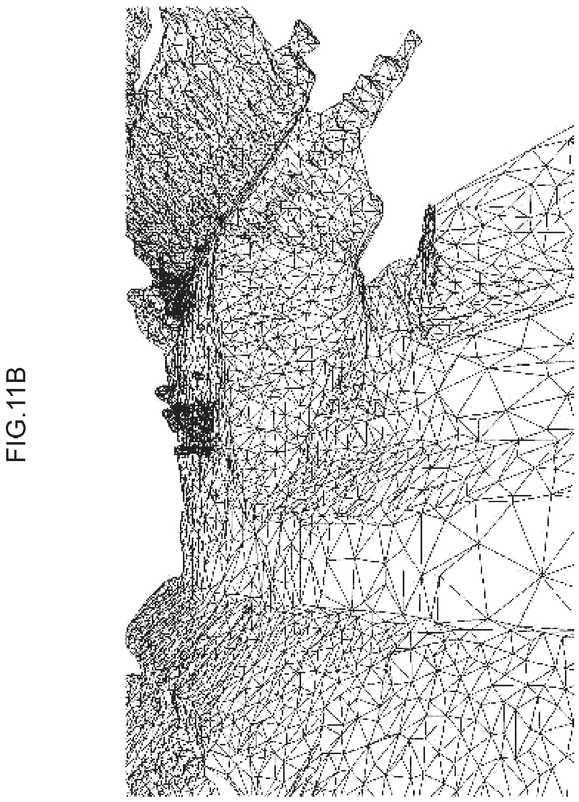

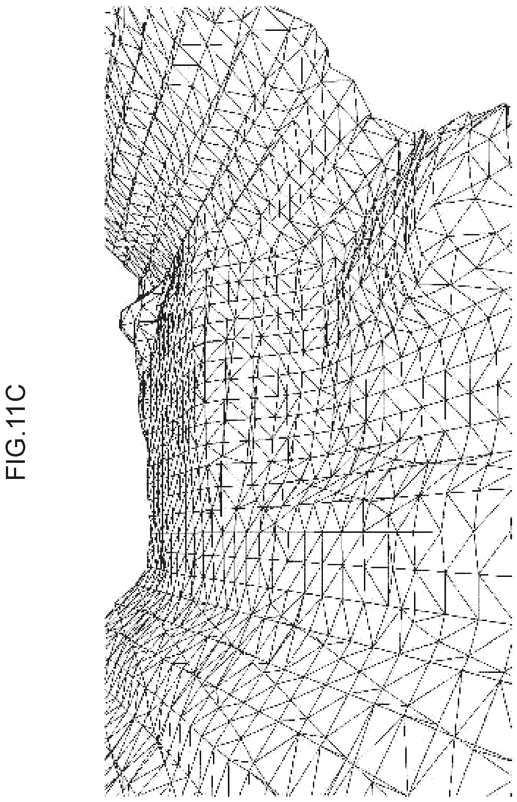

Fig. 11B illustrates an example of a three-dimensional model generated using measurement points acquired by aerial measurement of the scene illustrated in Fig. 11A. Fig. 11C illustrates an example of a three-dimensional model generated using measurement points from which measurement points corresponding to non-ground objects have been removed by applying the PMF to the measurement points acquired by aerial measurement of the scene in Fig. 11A, without classifying the measurement points into point group sub-regions as in the present exemplary embodiment.

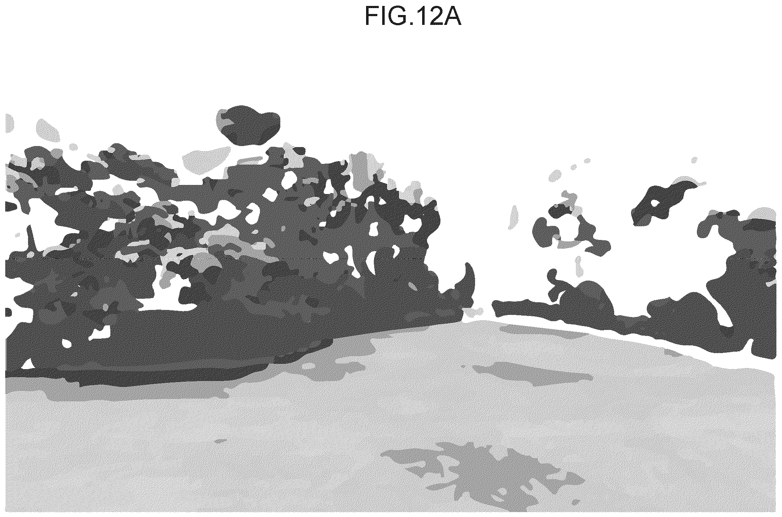

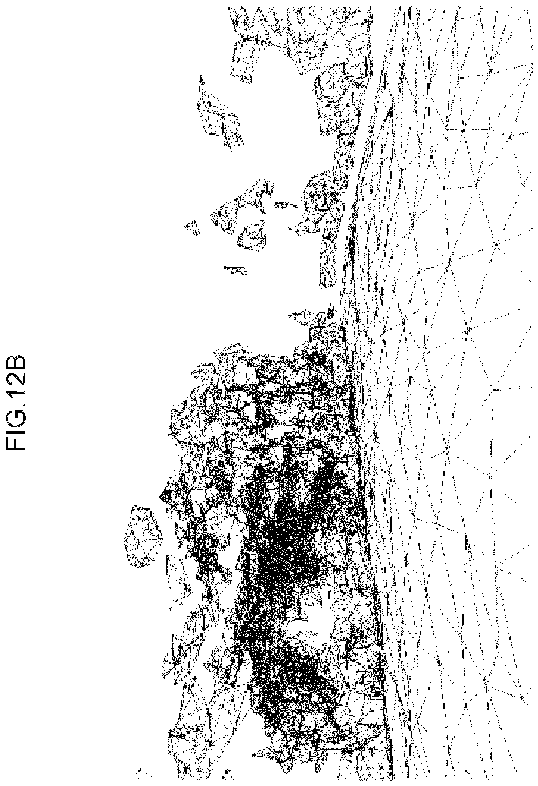

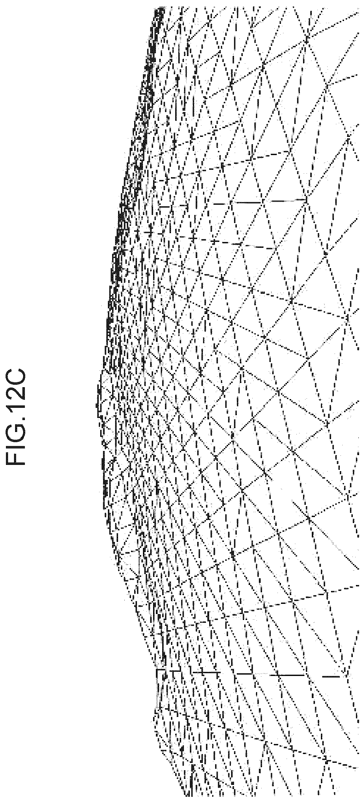

Fig. 12B illustrates an example of a three-dimensional model generated using measurement points acquired by aerial measurement of the scene illustrated in Fig. 12A. Fig. 12C illustrates an example of a three-dimensional model generated using measurement points from which measurement points corresponding to non-ground objects have been removed by applying the PMF to the measurement points acquired by aerial measurement of the scene in Fig. 12A, without classifying the measurement points into point group sub-regions as in the present exemplary embodiment.

Non-ground objects have not been removed from the three-dimensional models illustrated in Fig. 11B and Fig. 12B to which the PMF has not been applied, whereas non-ground objects have been removed from the three-dimensional models illustrated in Fig. 11C and Fig. 12C to which the PMF has been applied. There is an assumption that the PMF will be applied to measurement points in a scene measured from the air. Thus, as in the examples illustrated in Fig. 11C and Fig. 12C, three-dimensional models from which non-ground objects have been removed in an appropriate manner are generated from scenes in which topographic features are not present above, as is the case in Fig. 11A and Fig. 12A.

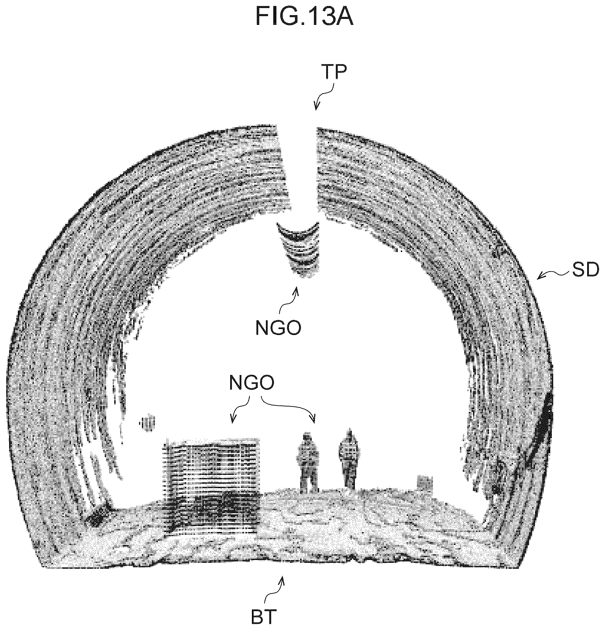

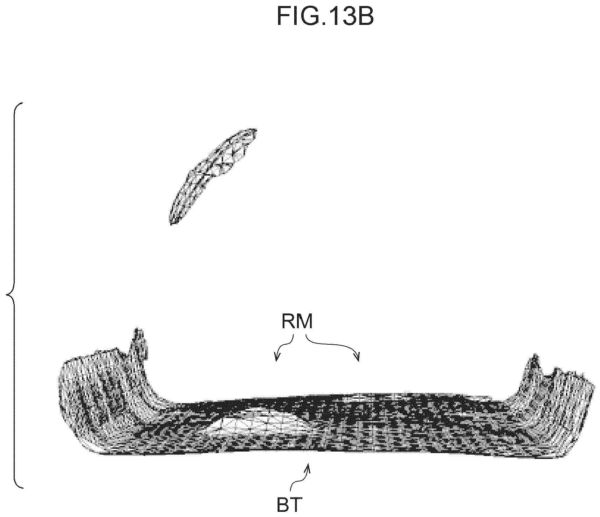

However, in the example of the scene illustrated in Fig. 13A, if the PMF is applied without classifying the measurement points into point group sub-regions as in the present exemplary embodiment, a three-dimensional model from which non-ground objects NGO have been suitably removed can be generated for lower topographic features BT as in the example illustrated in Fig. 13B. However, upper topographic features TP and side topographic features SD in the scene are removed together with the non-ground objects NGO, and so a suitable three-dimensional model cannot be acquired. If a three-dimensional model were to be generated without applying the PMF to the measurement points, then non-ground objects NGO would remain in the three-dimensional model as illustrated in the example at the center-right portion of Fig. 2.

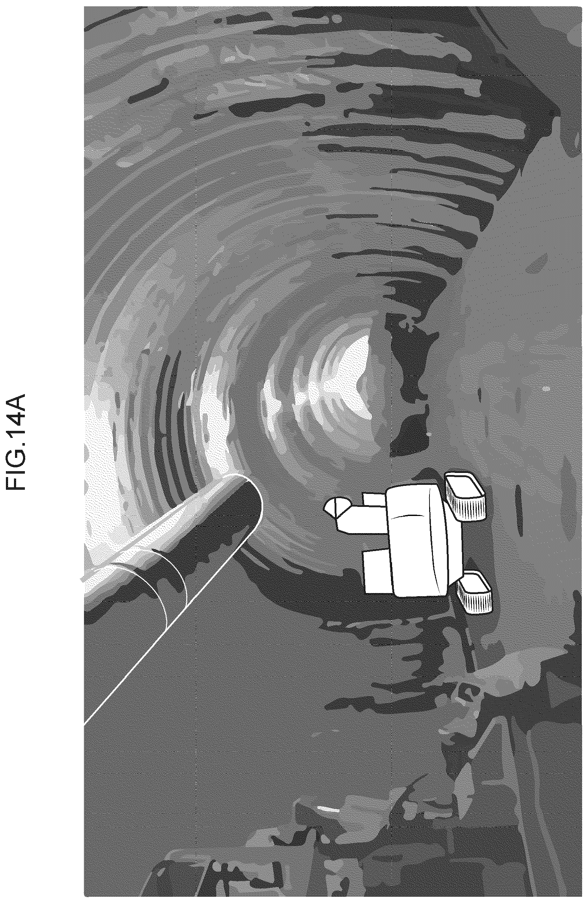

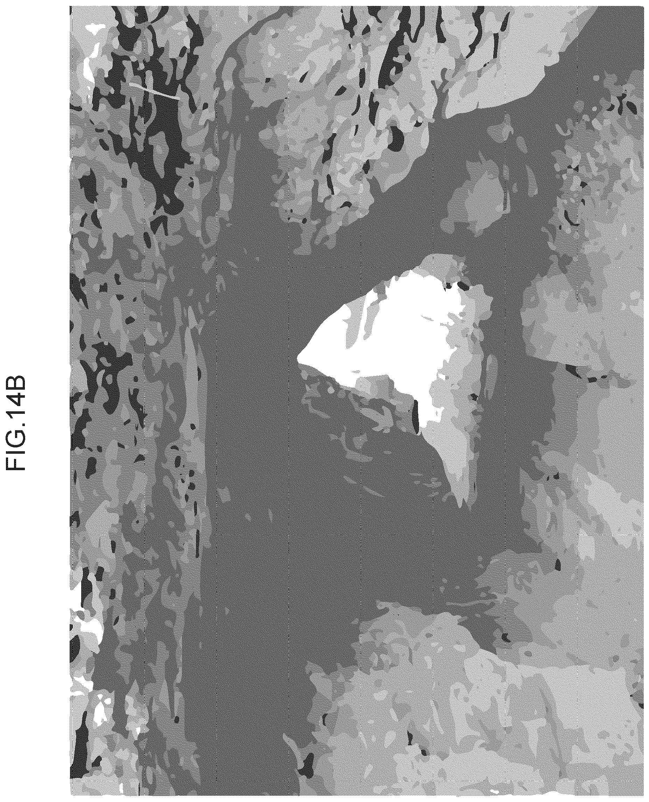

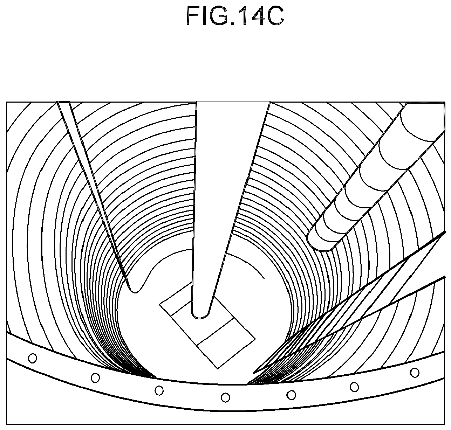

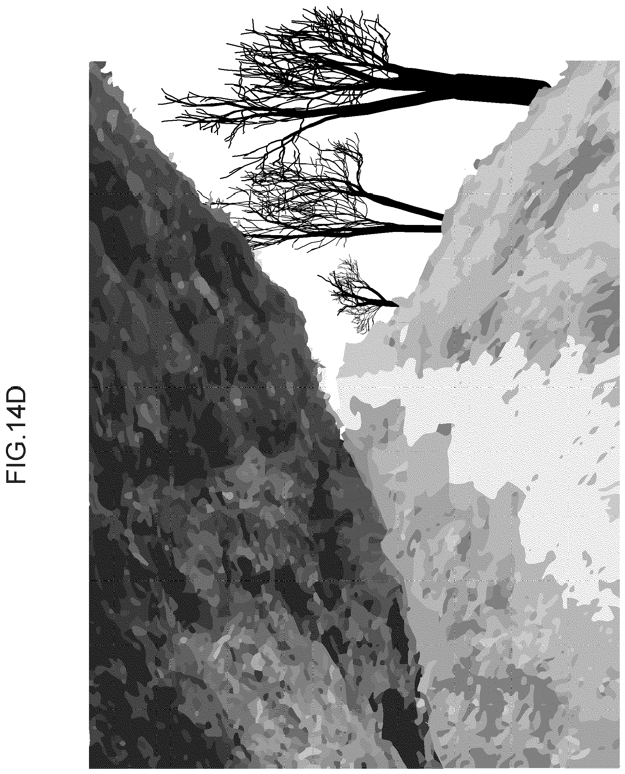

In contrast thereto, the present exemplary embodiment, in which the measurement points are classified into point group sub-regions and the line of gaze for each point group sub-region is modified to a line of gaze from a perspective looking down on the point group sub-region from above before applying the PMF to each point group sub-region, can be applied in the example of the tunnel illustrated in Fig. 14A. Moreover, the present exemplary embodiment can be applied not only to tunnels, but also to other scenes in which topographic features are present either above, at the sides, or both, such as the cave illustrated in the example in Fig. 14B, the shaft illustrated in the example in Fig. 14C, and the overhang illustrated in the example in Fig. 14D.

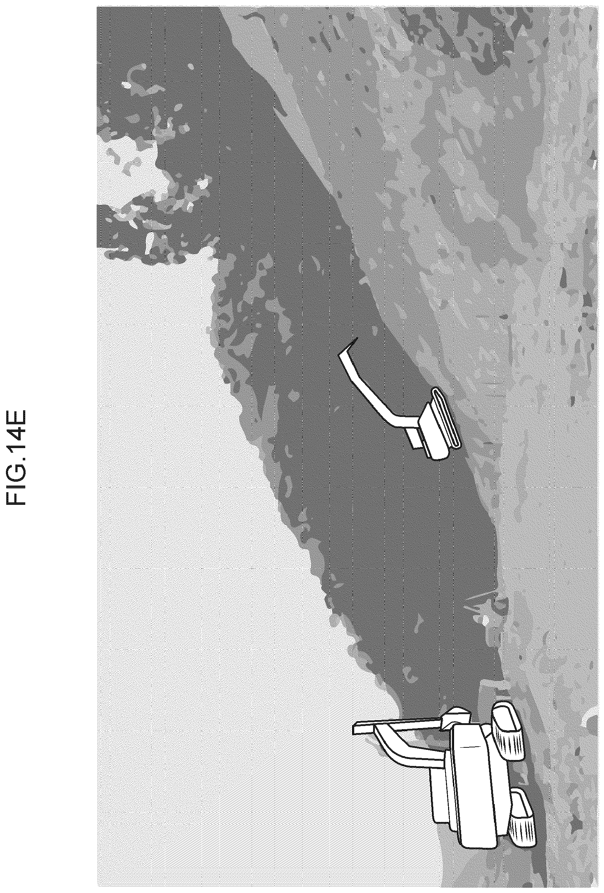

Furthermore, the present exemplary embodiment can also be applied to scenes where topographic features are not present above or at the sides, as in the example illustrated in Fig. 14E. In the present exemplary embodiment, setting the line of gaze vectors at omnidirectional uniformly spaced angles corresponding to 4π sr enables various scenes such as these to be accommodated. For example, in the scene illustrated in Fig. 14E, since almost all the measurement points would simply be classified into a point group sub-region corresponding to a downward-oriented line of gaze vector, there is no need to modify the flow of processing according to the scene to which it is applied.

One aspect of the present disclosure enables accurate estimation of topographic features present either above, at the sides, or both, in addition to topographic features present below.

## Claims

1. A program that causes a computer to execute topographic feature estimation processing, the topographic feature estimation processing comprising:
by using a plurality of classification vectors having mutually different orientations, classifying a plurality of measurement points, acquired by three-dimensional measurement of a scene and respectively including measurement information, into a plurality of point group sub-regions, each of which corresponds to a respective one of the plurality of classification vectors; and
estimating topographic features of the scene by:
for each of the plurality of point group sub-regions that have been classified, setting a plane intersecting the classification vector corresponding to the point group sub-region as a reference plane,
for each of the measurement points included in the point group sub-region corresponding to the reference plane, taking a distance from the reference plane to each of the measurement points, the distance being acquired based on the measurement information of each of the measurement points, as a height of each of the measurement points, and
by applying a progressive morphological filter to each of the plurality of point group sub-regions, removing a measurement point corresponding to a non-ground object from the plurality of measurement points acquired by the three-dimensional measurement.

2. The program of claim 1, wherein each of the plurality of measurement points is classified into a point group sub-region corresponding to one classification vector of the plurality of classification vectors, in which an inner product of each of the plurality of classification vectors and a normal vector estimated from the measurement point is a maximum value.

3. The program of claim 1 or claim 2, wherein:
a three-dimensional model is generated using a combined point group that is made by combining together the plurality of point group sub-regions to which the progressive morphological filter has been applied; and
the generated three-dimensional model is displayed on a display device or stored in a storage medium.

4. The program of claim 3, wherein a mark is appended to an element included in the three-dimensional model, the element corresponding to a missing portion at which a measurement point corresponding to the element is missing from the combined point group.

5. The program of claim 4, wherein a missing portion in a first three-dimensional model is patched over using an element included in a second three-dimensional model corresponding to a plurality of measurement points acquired by three-dimensional measurement of a similar scene to a scene corresponding to the first three-dimensional model.

6. A topographic feature estimation method, comprising:
by using a plurality of classification vectors having mutually different orientations, classifying a plurality of measurement points, acquired by three-dimensional measurement of a scene and respectively including measurement information, into a plurality of point group sub-regions, each of which corresponds to a respective one of the plurality of classification vectors; and
estimating topographic features of the scene by:
for each of the plurality of point group sub-regions that have classified, setting a plane intersecting the classification vector corresponding to the point group sub-region as a reference plane,
for each of the measurement points included in the point group sub-region corresponding to the reference plane, taking a distance from the reference plane to each of the measurement points, the distance being acquired based on the measurement information of each of the measurement points, as a height of each of the measurement points, and
by applying a progressive morphological filter to each of the plurality of point group sub-regions, removing a measurement point corresponding to a non-ground object from the plurality of measurement points acquired by the three-dimensional measurement.

7. The topographic feature estimation method of claim 6, wherein each of the plurality of measurement points is classified into a point group sub-region corresponding to one classification vector of the plurality of classification vectors, in which an inner product of each of the plurality of classification vectors and a normal vector estimated from the measurement point is a maximum value.

8. The topographic feature estimation method of claim 6 or claim 7, wherein:
a three-dimensional model is generated using a combined point group that is made by combining together the plurality of point group sub-regions to which the progressive morphological filter has been applied; and
the generated three-dimensional model is displayed on a display device or stored in a storage medium.

9. The topographic feature estimation method of claim 8, wherein a mark is appended to an element included in the three-dimensional model, the element corresponding to a missing portion at which a measurement point corresponding to the element is missing from the combined point group.

10. The topographic feature estimation method of claim 9, wherein a missing portion in a first three-dimensional model is patched over using an element included in a second three-dimensional model corresponding to a plurality of measurement points acquired by three-dimensional measurement of a similar scene to a scene corresponding to the first three-dimensional model.

11. A topographic feature estimation device (10), comprising:
a classification section (22, 23) that, by using a plurality of classification vectors having mutually different orientations, classifies a plurality of measurement points, acquired by three-dimensional measurement of a scene and respectively including measurement information, into a plurality of point group sub-regions, each of which corresponds to a respective one of the plurality of classification vectors; and
an estimation section (24, 25) that estimates topographic features of the scene by:
for each of the plurality of point group sub-regions that have been classified, setting a plane intersecting the classification vector corresponding to the point group sub-region as a reference plane,
for each of the measurement points included in the point group sub-region corresponding to the reference plane, taking a distance from the reference plane to each of the measurement points, the distance being acquired based on the measurement information of each of the measurement points, as a height of each of the measurement points, and
by applying a progressive morphological filter to each of the plurality of point group sub-regions, removing a measurement point corresponding to a non-ground object from the plurality of measurement points acquired by the three-dimensional measurement.

12. The topographic feature estimation device of claim 11, wherein the classification section (22, 23) classifies each of the plurality of measurement points into a point group sub-region corresponding to one classification vector of the plurality of classification vectors, in which an inner product of each of the plurality of classification vectors and a normal vector estimated from the measurement point is a maximum value.

13. The topographic feature estimation device of claim 11 or claim 12, further comprising:
a three-dimensional model generation section (26) that generates a three-dimensional model using a combined point group that is made by combining together the plurality of point group sub-regions to which the progressive morphological filter has been applied; and
a three-dimensional model output section (29) that displays the generated three-dimensional model on a display device or stores the generated three-dimensional model in a storage medium.

14. The topographic feature estimation device of claim 13, further comprising a marking section (27) that appends a mark to an element included in the three-dimensional model, the element corresponding to a missing portion at which a measurement point corresponding to the element is missing from the combined point group.

15. The topographic feature estimation device of claim 14, further comprising a patching section (28) that patches over a missing portion in a first three-dimensional model using an element included in a second three-dimensional model corresponding to a plurality of measurement points acquired by three-dimensional measurement of a similar scene to a scene corresponding to the first three-dimensional model.
